# EUROPEAN PATENT APPLICATION

(11) **EP 1 563 944 A2**
(43) Date of publication of application: **17.08.2005**
(21) Application number: 05101166.6
(22) Date of filing: 16.02.2005
(51) Int. Cl.: B23K 37/04, B23K 37/02

(54) **Workbench for plasma cutting or welding operations.**

(30) Priority: 17.02.2004 IT VI20040025
(71) Applicant: GARDIN, Roberto, 36060 S. Giacomo di Romano d'Ezzelino (VI) (IT)
(72) Inventor: PELLIZZATO, Giovanni, 36060, Romano d'Ezzelino (VI) (IT)
(74) Representative: Bonini, Ercole

(57) **Abstract**

A workbench (1) for cutting metal elements (P) by means of plasma torches (T) and/or for welding with MIG-TIG torches, comprising a bearing structure (2) in which it is possible to identify at least one work surface (3) on which the metal elements (P) to be processed are positioned and at least one support unit (4, 5) of the torch (T) suited to carry out said operations, in which the support unit (4, 5) is associated with moving and guide means (6, 7) suited to move the torch (T) with respect to the work surface (3).

## Description

The invention concerns a workbench particularly suited to be used for cutting metal elements by means of plasma torches and/or for welding with MIG-TIG torches.

It is known that the plasma cutting of plates and/or metal tubes can be carried out manually or by means of automatic machines.

In the case of automated plasma cutting processes, numerical control machines are generally used, which are properly programmed to carry out the required processing repeatedly on a given number of pieces.

This type of machine, due to its dimensions and cost, is suited to be used mainly in large-sized workshops and/or steel processing factories, where considerable quantities of identical pieces are produced in a repetitive manner, so that the system's considerable purchase and operating costs are justified.

In small steel processing factories, where it is necessary to cut plates and/or metal tubes in order to make holes or pockets in individual pieces, manual plasma torches are used.

In this case the operator grasps the plasma torch and processes the piece manually, by following, for example, a shape that has been previously traced on the piece itself.

However, the above cited known techniques have some recognized drawbacks.

When automated plasma cutting systems are used, the main drawback is clearly represented by the high cost of the system, which makes it convenient especially if repetitive operations must be carried out on numerous lots.

Furthermore, for the use of this type of systems, properly trained personnel is obviously required.

Another drawback connected with the use of automated plasma cutting systems is represented by the fact that this type of systems is not suited to process thick pieces, like, for example, large tubular elements.

To cut individual pieces or small lots, manual plasma torches are used, as described above.

In this case, the main drawback is represented by the fact that the plasma torch is guided manually by an operator and for this reason it is not possible to carry out very precise operations in terms of size, shape and finish of the piece.

A further drawback, connected to the previous one, is represented by the fact that the pieces processed with manual plasma torches must necessarily be worked again through successive processing steps in order to obtain the desired shape and sizes.

This clearly means an increase in processing costs.

In fact, it is difficult for an operator, even if skilled, to carry out manually operations that are complex due to the shape or size required, like for example a circumference or a polygon.

The present invention aims to overcome the drawbacks mentioned above.

A first aim of the invention is to carry out a workbench for cutting metal elements by means of plasma torches and/or welding with MIG/TIG torches that makes it possible to process metal pieces more precisely and accurately compared to the above cited known manual technique.

It is a further aim of the invention to carry out a workbench in which it shouldn't be necessary to subject the piece to further processing in order to obtain the required finish.

It is a further aim of the invention to carry out a workbench that should be more practical than the above cited known automated systems, and therefore should also be suitable for processing small lots.

Another aim of the invention is to carry out a workbench on which it should be possible to process also large and thick pieces that are not suited to be loaded on the automated systems of the known type.

The above mentioned aims have been achieved through the implementation of a workbench for cutting metal elements by means of plasma torches and/or for welding with MIG/TIG torches that, according to the main claim, comprises a bearing structure in which it is possible to identify at least one work surface, where said metal elements to be processed are positioned, and at least one support unit for said torch suited to carry out said operations, and is characterized in that said support unit is associated with moving and guide means suited to move said torch with respect to said work surface.

The aims and advantages described above will be highlighted in greater detail in the description of a favourite embodiment of the invention, supplied as an indicative and non-limiting example with reference to the enclosed drawings, wherein:
- Figure 1 is an axonometric view of the workbench object of the invention;

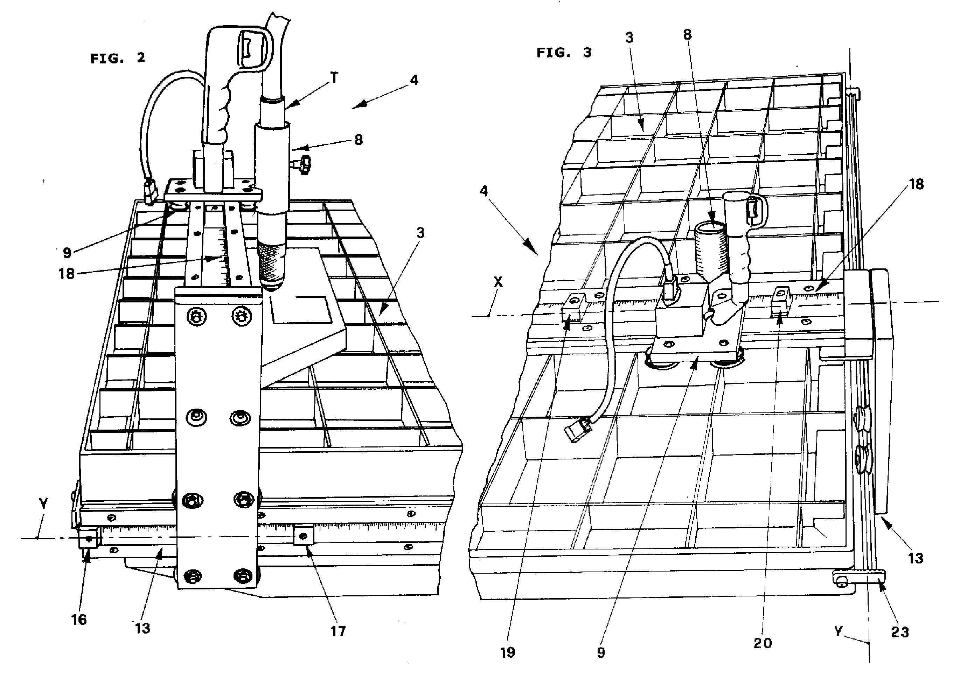

- Figures 2 and 3 show two details of the first support unit of the workbench of Figure 1;
- Figure 4 shows a detail of the second support unit of the workbench of Figure 1;

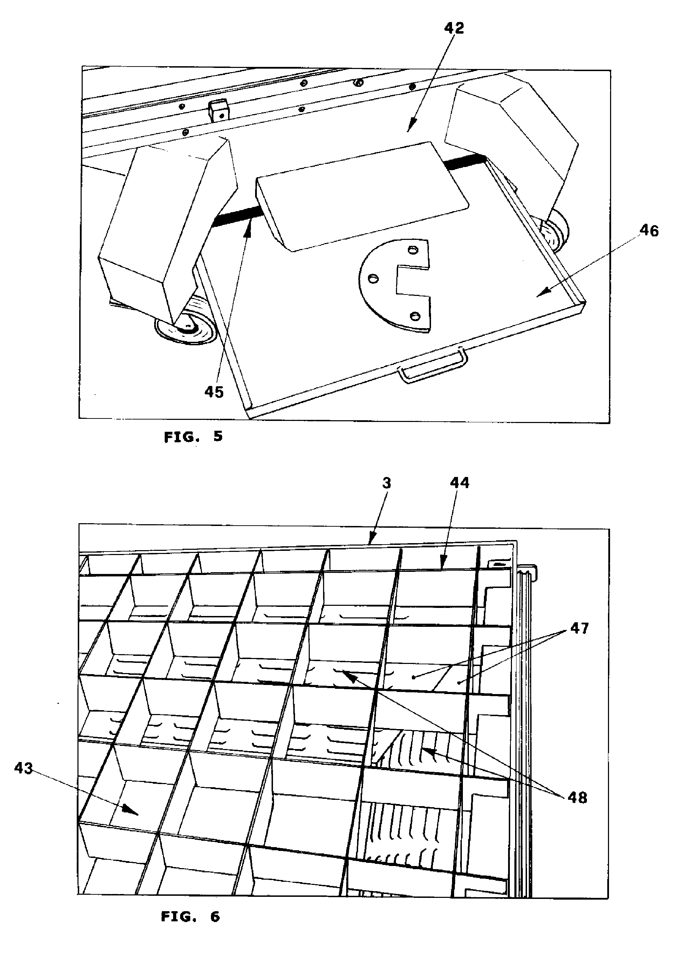

- Figures 5 and 6 show other two details of the workbench of Figure 1;
- Figures 7, 8 and 9 show an executive embodiment of the workbench of Figure 1.

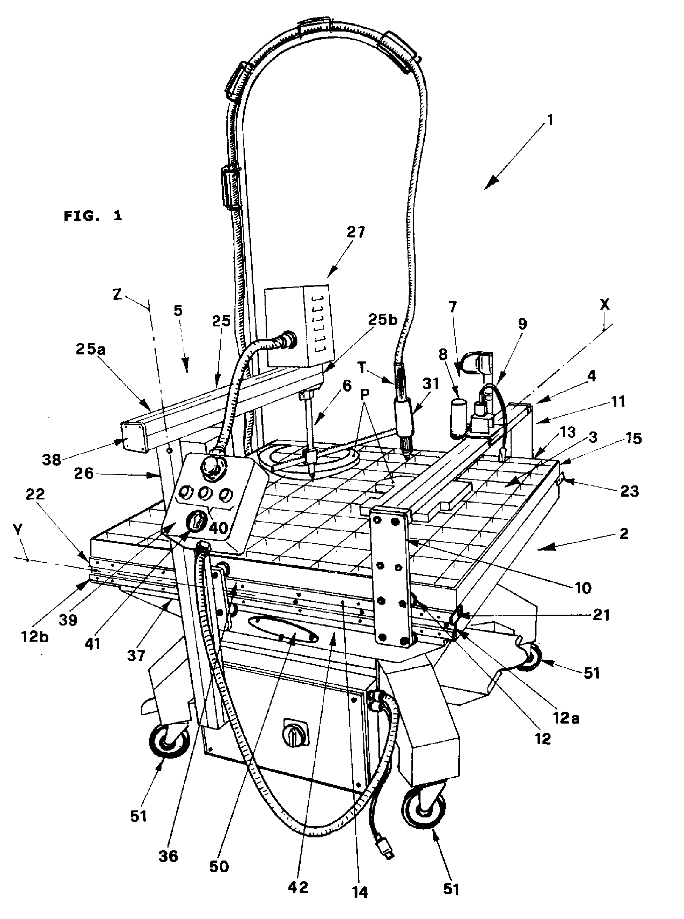

As can be observed in Figure 1, the workbench for cutting metal elements by means of plasma torches **T** object of the invention, indicated as a whole by **1,** comprises a bearing structure **2** in which it is possible to identify at least one work surface **3,** on which said metal elements **P** to be processed are positioned and at least one support unit **4, 5** of said torch **T** suited to carry out said operations.

According to the invention, the above mentioned support unit **4, 5** is associated with moving and guide means **6, 7** suited to move said torch **T** with respect to said work surface **3.**

In the executive embodiment represented in Figure 1, the workbench **1** is provided with two distinct support units **4, 5** of the plasma torch **T.**

As regards the first support unit **4,** it comprises a torch holder **8** slidingly coupled with a first guide structure **9** that defines a first displacement axis **X** on a plane parallel to the work surface **3.**

The first guide structure **9** is supported at its ends by two vertical elements **10, 11,** each one of which is connected to a corresponding linear guide structure **12, 13** associated with the bearing structure **2** of the workbench **1** that defines a second displacement axis **Y** perpendicular to the first axis **X**.

The vertical elements may also be sized according to the user's needs.

The result is a substantially door-shaped structure that slides along the work surface **3** of the bench **1**.

The linear guides **12, 13** associated with the workbench **1,** on which the described vertical elements **10, 11** slide, are provided with a graduated ruler **14, 15** and with first reference means **16, 17** to define the stroke of the plasma torch **T** along the axis **Y.**

Also the first guide structure **9,** to which the torch holder **8** is associated, is provided with a graduated ruler **18** and with second reference means **19, 20** to define the processing stroke of the torch **T** along the axis **X.**

In correspondence with the ends **12a, 12b, 13a, 13b** of the linear guides **12, 13** there are hooking means **21, 22, 23, 24** that make it possible to withdraw the entire first support unit 4 from the workbench **1** if this is not going to be used or represents an obstacle in the work area.

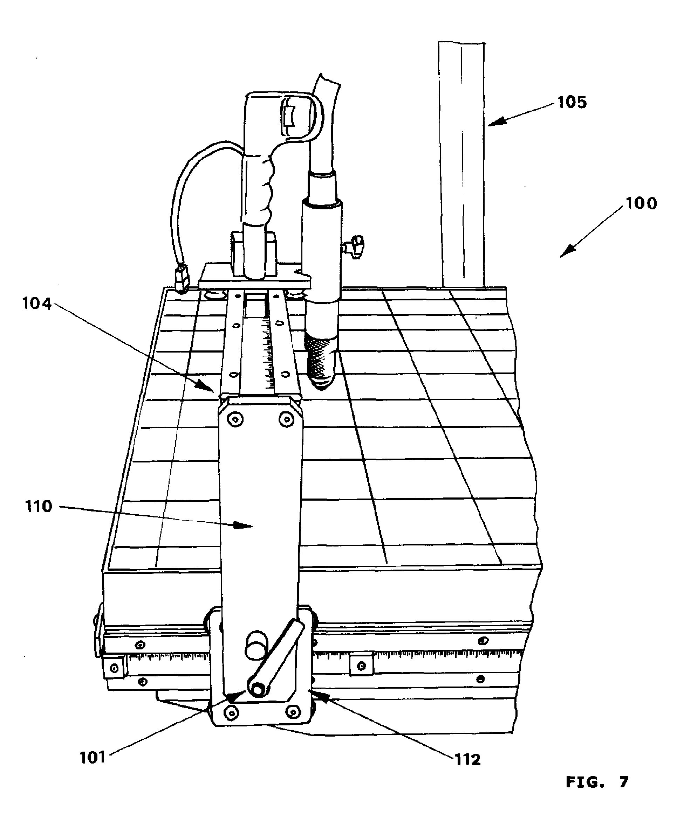

In the executive embodiment **100,** represented in Figures 7, 8 and 9, the vertical elements **110, 111** are equipped with hinge means **101, 102** for connection to the guide structures **112, 113,** allowing the whole support unit **104** to be rotated around the axis **X'** defined by the hinge means **101, 102.**

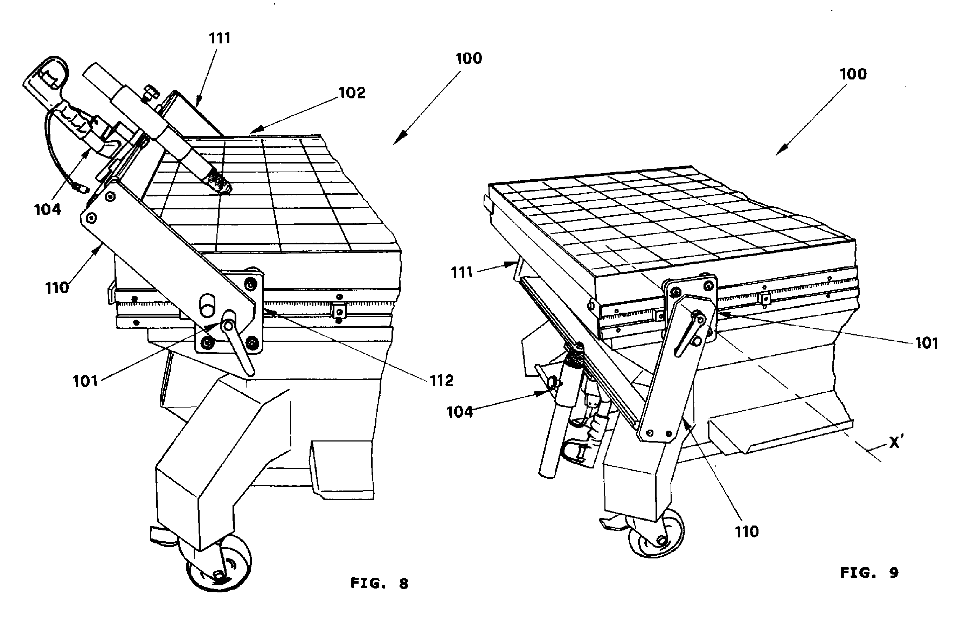

The rotation of the support unit **104** makes it possible to carry out cutting operations on inclined surfaces, as shown in Figure 8, and also to tilt the support unit **104** completely, as shown in Figure 9, to clear the work area **103** if it is necessary to cut large pieces using only the support unit **105.**

As regards the second support unit **5,** it comprises a support arm **25** protruding over the work surface **3** and having one end **25a** connected to the bearing structure **2** of the workbench **1** through a vertical element **26,** while on the opposite end **25b** there are driving means **27** connected to a second torch holder **31** by means of a support rod **28** keyed to the shaft **29** of the electric motor **30.**

In other executive embodiments a pneumatic motor may be installed in the second support unit **5** instead of the electric motor.

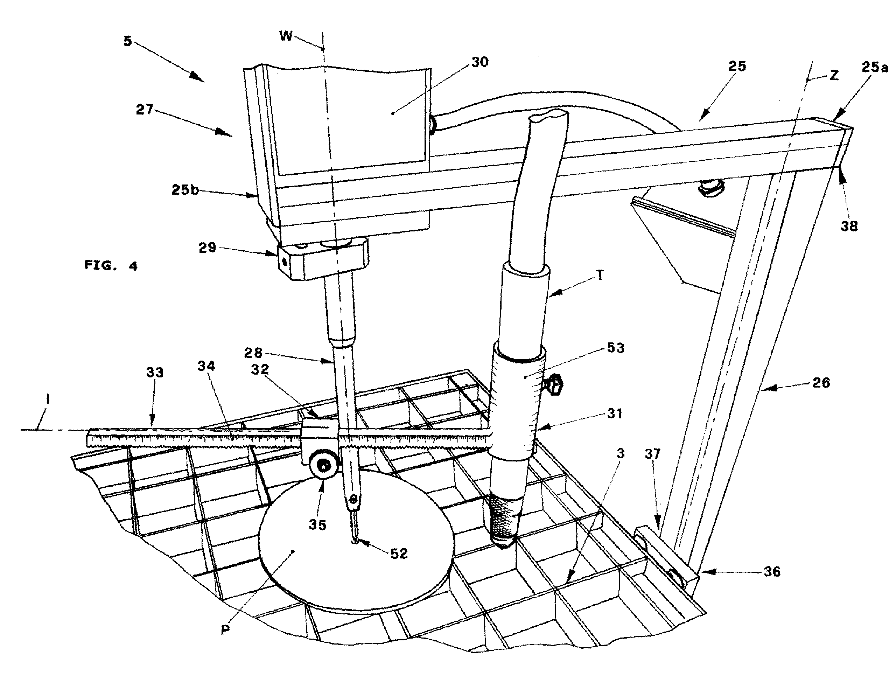

As can be observed in Figure 4, the torch holder **31** is associated with the support rod **28** through a guide structure **32** constituted by a rack **33,** equipped with a graduated ruler **34,** guided with an adjusting knob **35** suited to modify the distance between the torch holder **31** and the support rod **28** in order to vary the radius of the processed profile.

The support rod **28** is also provided with a point **52** to center the piece **P** to be processed.

The vertical element **26** that supports the arm **25** is associated with the workbench **1** by means of a linear guide **36** that allows it to be moved along the direction defined by the axis **Y.**

It is also associated with another guide structure **37** that allows it to be vertically moved along the direction defined by the axis Z represented in Figure 1.

The support arm **25** is connected to the vertical element **26** through moving means **38** suited to allow it to be rotated, in such a way as to enable the torch **T** to carry out the required operations in the different zones of the work surface **3.**

The workbench **1** is equipped with a control panel **39** used to control the described driving means **27** for the rotation of the torch holder **31,** said panel being provided with push buttons **40** to control the rotary movement of the torch holder **31** and with a potentiometer **41** to adjust its rotation speed.

As regards the bearing structure **2** of the workbench **1,** it comprises a box-type body **42** defining an internal space **43** for collecting processing scraps.

The box-type body **42** has the shape of a truncated cone, in the upper part of which there is the work surface **3** constituted by a grid structure **44,** while in its lower part there is a container **45** to collect said processing scraps.

The collecting container **45** is also provided with a drawer **46** that allows the accumulated processing scraps to be thrown away.

In the space **43** inside the box-type body **42** partitions **47** are provided, which are equipped with grids **48** defining an air space **49** for the suction of the fumes produced during the welding or plasma cutting operations.

On the external side surface of the box-type body **42** there are suction vents **50** that allow the workbench **1** to be connected to a centralized fume suction system.

The workbench **1** is also provided with independent wheels **51** that allow it to be comfortably transported to the different areas of the workshop where it must be used.

Operatively, with the workbench **1** of the invention it is possible to cut metal elements **P** by means of plasma torches **T,** thus obtaining, for example, substantially circular or polygonal-shaped profiles of the desired size, with no need to carry out further finishing operations as it happens when the plasma torch **T** is used manually.

Thanks to the first support unit **4** it is possible, by properly arranging the first **16, 17** and second **19, 20** reference means with the graduated ruler **14, 15, 18,** to obtain polygonal profiles, like for example a rectangle, with the dimensions set by the user.

In this type of processing the torch **T** is manually guided by the operator, who moves it by means of the guide structures **9, 12, 13** described above.

When, on the other hand, it is necessary to cut a metal element **P** following a circular profile, the second support unit **5** is used, through which, once the plasma torch **T** has been positioned in the corresponding torch holder **31,** it is possible to adjust the radius of the circumference and to carry out the operation automatically, by starting the above mentioned driving means **27** that allow the torch **T** to follow a circular profile whose radius is set by adjusting the rack guide **32.**

If it is necessary to process only circular profiles of large metal elements **P,** it is possible to remove the first support unit **4** from the workbench **1,** releasing the locking means **21, 22, 23, 24** and making the unit **4** slide until it can be withdrawn from the guides **12, 13,** or simply tilting it, as in the case of the executive embodiment **100** shown in Figure 9.

In this way, the work surface **3** is free from obstacles.

According to the above, it is clear that the workbench **1** of the invention achieves all the aims set.

In particular, it is achieved the aim to implement a workbench for welding or cutting metal elements by means of plasma torches that, owing to the presence of a first and a second torch support and guide structure allows more precise and accurate operations to be carried out with respect to the above mentioned known manual technique.

The invention also achieves the aim to implement a workbench that allows the above mentioned operations to be carried out with no need to subject the piece to further finishing operations.

It is also achieved the aim to implement a workbench to carry out plasma cutting and/or MIG-TIG welding operations according to geometrical profiles that be more practical than the automated systems, without requiring the presence of specialized personnel.

Upon implementation, modifications and variations, which have not been described and represented herein, may be made on the workbench of the invention.

The embodiments described and any other not mentioned herein shall be considered protected by the present patent, provided that they fall within the scope of the claims expressed below.

## Claims

1. Workbench (1) for cutting metal elements (P) by means of plasma torches (T) and/or for welding with MIG-TIG torches, comprising a bearing structure (2) in which it is possible to identify at least one work surface (3), on which said metal elements (P) to be processed are positioned, and at least one support unit (4, 5) of said torch (T) suited to carry out said operations, **characterized in that** said support unit (4, 5) is associated with moving and guide means (6, 7) suited to move said torch (T) with respect to said work surface (3).

2. Workbench (1; 100) according to claim 1), **characterized in that** said support unit (4) comprises at least one torch holder (8) slidingly coupled with a first guide structure (9) suited to define a first displacement axis (X), said first guide structure (9) being supported by at least one vertical element (10, 11) associated with a second guide structure (12, 13) slidingly coupled with said bearing structure (2) defining a second displacement axis (Y) perpendicular to said first displacement axis (X).

3. Workbench (1) according to claim 2), **characterized in that** said vertical element (26) is associated with a third guide structure (37) defining a third displacement axis (Z) perpendicular to said first (X) and to said second (Y) displacement axis.

4. Workbench (1) according to claim 2), **characterized in that** said torch holder (31) is provided with driving means (27) suited to set it rotating around a fourth vertical axis (W) orthogonal to said work surface (3).

5. Workbench (1) according to claim 1), **characterized in that** it comprises only one support unit (4) provided with at least one torch holder (8) slidingly coupled with a first guide structure (9), said first guide structure (9) being supported by at least one vertical element (10, 11) associated with a second guide structure (12, 13) slidingly coupled with said bearing structure (2).

6. Workbench (1) according to claim 1), **characterized in that** it comprises only one support unit (5) constituted by at least one torch holder (31) provided with driving means (27) suited to set it rotating around a vertical axis (W) orthogonal to said work surface (3).

7. Workbench (1) according to claim 1), **characterized in that** it comprises a first support unit (4) provided with at least one torch holder (8) slidingly coupled with a first guide structure (9), said first guide structure (9) being supported by at least one vertical element (10, 11) associated with a second guide structure (12, 13) slidingly coupled with said bearing structure (2) and a second support unit (5) comprising at least one torch holder (31) provided with driving means (27) suited to set it rotating around a vertical axis (W) orthogonal to said work surface (3).

8. Workbench (1) according to any of the claims 4), 6), or 7), **characterized in that** said torch holder (31) is associated with a fourth guide structure (32) suited to define a displacement axis (I) orthogonal to said fourth rotation axis (W).

9. Workbench (1) according to claim 8), **characterized in that** said fourth guide structure (32) is associated with a support rod (28) keyed to the shaft (29) of said driving means (27).

10. Workbench (1) according to claim 9), **characterized in that** said support rod (28) is provided with a point (52) to center the piece (P) to be processed.

11. Workbench (1) according to claim 8), **characterized in that** said fourth guide structure (32) is constituted by a rack (33) provided with a graduated ruler (34) associated with adjusting means (35) suited to modify the distance between said torch holder (31) and said support rod (28) in such a way as to vary the radius of the processed profile.

12. Workbench (1) according to any of the claims 4), 6), or 7), **characterized in that** said driving means (27) are constituted by an electric motor (30) provided with gear motor.

13. Workbench (1) according to any of the claims 4), 6), or 7), **characterized in that** said driving means are constituted by a pneumatic motor.

14. Workbench (1) according to claim 2), **characterized in that** said torch holder (8, 31) is constituted by a cylindrical, tubular body (53) suited to house said torch (T).

15. Workbench (1) according to claim 2), **characterized in that** said first (9) and said second (12, 13) guide structure are provided with graduated rulers (14, 15, 18) suited to adjust their stroke.

16. Workbench (1) according to claim (1), **characterized in that** said bearing structure (2) comprises a box-type body (42) suited to define an internal space (43) for collecting processing scraps.

17. Workbench (1) according to claim 16), **characterized in that** said box-type body (42) has the shape of a truncated cone and is suited to define a hopper for conveying said processing scraps into a collection container (45).

18. Workbench (1) according to any of the claims 1) or 16), **characterized in that** said work surface (3) comprises a grid structure (44) communicating with said internal space (43) of said box-type body (42).

19. Workbench (1) according to claim 16), **characterized in that** the inside of said box-type body (42) is provided with partitions (47) suited to define an air space (49) for sucking processing fumes.

20. Workbench (1) according to claim 19), **characterized in that** said partitions (47) are provided with suction grids (48).

21. Workbench (1) according to claim 16), **characterized in that** said collection container (45) is provided with a drawer (46) for throwing away said processing scraps.

22. Workbench (1) according to claim 16), **characterized in that** said box-type body (42) is provided with wheels (51) suited to make said workbench (1) movable.

23. Workbench (100) according to claim 2), **characterized in that** it is provided with hinge means (101, 102) to connect said vertical element (110, 111) to said guide structure (112, 113), said hinge means being suited to allow said support unit (104) to rotate around the axis (X') defined by said hinge means (101, 102).

24. Workbench (1) substantially as described and represented.
